# EUROPÄISCHE PATENTSCHRIFT

(11) **EP 0 493 543 B1**
(45) Veröffentlichungstag und Bekanntmachung des Hinweises auf die Patenterteilung: **06.12.1995**
(21) Anmeldenummer: 91911234.2
(22) Anmeldetag: 24.06.1991
(51) Int. Cl.: B60R 13/08, B32B 5/32, B32B 7/02, G10K 11/16

(54) **GERÄUSCHMINDERNDE FAHRZEUGVERKLEIDUNG**
SOUND-ABSORBING LINING FOR VEHICLES
REVETEMENT INSONORISANT POUR L'INTERIEUR D'UN VEHICULE

(30) Priorität: 19.07.1990 CH 2402/90
(43) Veröffentlichungstag der Anmeldung: 08.07.1992
(73) Patentinhaber: RIETER AUTOMOTIVE (INTERNATIONAL) AG, CH-8700 Küsnacht (CH)
(72) Erfinder: MÜLLER, Peter, D-6107 Rheinheim (DE); WEDERMANN, Günther, CH-8304 Wallisellen (CH)
(74) Vertreter: Ritscher, Thomas, Dr.
(86) Internationale Anmeldenummer: CH9100137
(87) Internationale Veröffentlichungsnummer: WO9201587

(56) Entgegenhaltungen:
- EP-A- 0 104 357
- DE-A- 2 006 741
- DE-A- 3 709 080
- DE-U- 8 121 378
- DE-U- 8 812 664

## Beschreibung

Die vorliegende Erfindung betrifft eine geräuschmindernde Verkleidung für die Innenausstattung der Fahrgastkabinen von Fahrzeugen gemäss Oberbegriff des Anspruchs 1.

Solche Verkleidungen finden ihre Verwendung hauptsächlich auf dem Gebiet des Automobilbaus, wo für die Innenausstattung der Fahrzeuge in zunehmendem Maße nicht nur dekorative, sondern auch funktionelle Verkleidungen verwendet werden. Insbesondere werden heute Verkleidungen eingesetzt, mit denen der Geräuschpegel im Fahrgastraum merklich reduziert werden kann, um den Komfort zu erhöhen. Die moderne Automobilindustrie zeigt deshalb ein großes Interesse an Maßnahmen zur wirksamen Reduktion der u.a. von Motor-, Auspuff- oder Reifengeräuschen hervorgerufenen Lärmbelastung im Innern der Fahrzeugkabinen.

Herkömmliche Maßnahmen zur Reduktion des Lärmpegels bestehen in der Regel darin, daß in einem ersten Schritt die geräuschübertragenden und geräuscherzeugenden Karosserieteile mit bituminösen Folien belegt und versteift werden, in einem zweiten Schritt ein als akustisches Feder-Masse-System wirkendes Schallisolationssystem aufgebracht wird, auf welches wiederum eine dekorative Teppichlage aufgebracht wird. Solche mehrschichtigen Verbund-Verkleidungen dämpfen einerseits durch den Masseneffekt sowie durch die von der aufgebrachten bituminösen Schwerschicht erzeugte Versteifung die Straßengeräusche, beispielsweise in den Radkästen, und dämpfen den von den Vibrationen der Karosserieteile erzeugten Körperschall. Die aufliegenden oder aufgeklebten Teppichlagen weisen in der Regel eine weitere schallabsorbierende Hinterschäumung auf, um den in der Fahrgastkabine bestehenden Geräuschpegel weiter zu reduzieren. Solche mehrschichtigen Verbund-Verkleidungen zeichnen sich durch ihre relativ guten schalldämmenden und körperschalldämpfenden Eigenschaften aus und können durch beliebige Wahl der Teppichlagen relativ einfach an gewünschte dekorative Wirkungen angepaßt werden. Diese mehrschichtigen Verbund-Verkleidungen sind aber oft unerwünscht dick, weisen ein umfangreiches und kompliziertes Herstellungsverfahren auf und sind im Handling äußerst problematisch.

So ist beispielsweise aus der EP-A-253'376 ein adhäsives Isolationssystem bekannt, bei welchem auf den Untergrund ein erster Belag aufgebracht ist, welcher eine als akustisches Masse-Feder-System wirkende mehrschichtige Isolationsschicht trägt. Auf diese Isolationsschicht bzw. deren Schwerschicht ist eine aus weichelastischem, überwiegend offenporigem Material bestehende Entkopplerschicht aufgebracht, auf welcher wiederum eine aus Laufschicht und Unterschicht bestehende Teppichlage befestigt ist. Dieses Isolationssystem weist zwar gute akustische Wirkungen auf, vermag aber aus verschiedenen Gründen nicht zu befriedigen.

Einerseits führt der in dieser Druckschrift vorgeschlagene Aufbau zu einer Verbundverkleidung, welche insbesondere im Automobilbau, wo möglichst platzsparend gearbeitet werden muss, eine unerwünscht grosse Höhe aufweist. Andererseits vermindert die in dieser Druckschrift verwendete Entkopplerschicht die Trittfestigkeit der gesamten Verkleidung und erzeugt damit beim Fahrgast ein Gefühl der Instabilität und Unsicherheit. Die jedem offenporigen Material innewohnenden Saugfähigkeit für Feuchtigkeit und Nässe läßt diese Verkleidungen schnell verschmutzen und ihre gewünschten Eigenschaften rasch verlieren. Es versteht sich, daß derart verschmutzte Verkleidungen unerwünschten Zersetzungsprozessen mit unangenehmen Ausdünstungen unterworfen sind und keine brauchbare Lebensdauer aufweisen. Es braucht nicht explizit darauf hingewiesen zu werden, daß ein Verfahren zur Herstellung eines solchen adhäsiven Isolationssystems und dessen Einbau in die Fahrzeuge äußerst aufwendig und unpraktisch ist.

Aus der EP-A-104 357, die den Oberbegriff des Anspruchs 1 bildet, ist eine mehrschichtige Schalldämmauskleidung bekannt, welche auf das Bodenblech eines Fahrzeugs aufgeklebt ist und im wesentlichen aus einer ersten hochelastischen Absorptionsschicht, einer porösen Schwerschicht, einer zweiten verhältnismässig steifen Absorptionsschicht und einer dekorativen Deckschicht besteht. Aufgabe dieser Schalldämmauskleidung ist es, die Dämmung des von den Karosserieteilen ins Fahrzeuginnere abgestrahlten Geräuschpegels, insbesondere unterhalb 1 kHz, zu verbessern. Der in dieser Druckschrift offenbarte Schichtaufbau erfordert ein aufwendiges Herstellungsverfahren und ist wirtschaftlich nicht sehr attraktiv. Insbesondere werden diese Schalldämmauskleidungen mit Schaumstoffen hergestellt. Dazu müssen diese eine geschlossene Deckschicht aufweisen, damit verhindert werden kann, dass die Hinterschäumung durch die Poren der Teppichlage auf die sichtbare Seite dieser dekorativen Deckschicht quilt. Diese Schalldämmauskleidungen eignen sich nicht für die Absorption des inneren Fahrzeugkabinen-Schallfeldes.

Es ist deshalb das Ziel der vorliegenden Erfindung, eine gegenüber dem zitierten Stand der Technik vereinfachte geräuschmindernde Verkleidung zu schaffen, welche die Probleme der bekannten Maßnahmen zur Lärmreduktion im Innern von Fahrzeugen nicht aufweist.

Insbesondere soll ein Verfahren geschaffen werden, welches die Herstellung akustisch wirksamer Verkleidungen vereinfacht und zu Verkleidungen führt, deren akustische Wirksamkeit sowie Dauerhaftigkeit bei gleichbleibender Aufbaustärke gesteigert ist.

Erfindungsgemäss wird diese Aufgabe mit den Merkmalen des Anspruchs 1 gelöst. Hierber wird mindestens zwischen der Federschicht und der Teppichlage eine Sperrschicht in Form einer wasserdampfdurchlässigen, die Transmission von Schallwellen erlaubenden, jedoch wasserundurchlässigen Schicht vorgesehen. Ferner wird die Schwerschicht in die Teppichlage integriert und die gesamte Teppichlage als luftdurchlässige Schicht ausgebildet.

Damit wird erreicht, daß das Schallfeld im Innern des Fahrgastraumes an die Federschicht ankoppeln kann, und die hervorragenden akustischen Eigenschaften der Federschicht auch für die Absorption dieses Schallfeldes verwendet werden können. Gleichzeitig wird damit also die akustische Wirksamkeit der gesamten Verbundverkleidung erhöht, ohne zusätzliche absorbierende Schichten einbringen zu müssen und ohne die Stärke des gesamten Verkleidungselementes zu erhöhen.

Mit der vorgeschlagenen Anordnung ergibt sich weiterhin, daß sich der Spielraum für die Optimierung der Trittfestigkeit vergrößert und die erfindungsgemäß hergestellten Verkleidungselemente an die individuelle Verteilung der als Schallquellen oder Schallsenken wirkenden Unterteile problemlos angepaßt werden kann.

In einer bevorzugten Ausführungsform wird die Federschicht des akustischen Isolationssystems mit einer Sperrschicht versehen, welche diese vor Verschmutzungen schützt, welche die akustische Wirksamkeit und Beständigkeit dieser Schichten beeinträchtigen. Insbesondere ist eine Sperrschicht vorgesehen, welche wasserundurchlässig und wasserdampfdiffusionsfähig ist.

Die vorliegenden Maßnahmen erweisen sich als überraschend einfach und wirksam und bilden eine kostengünstige und dauerhafte Lösung für die Verminderung des Lärmpegels im Innern von Fahrzeugen.

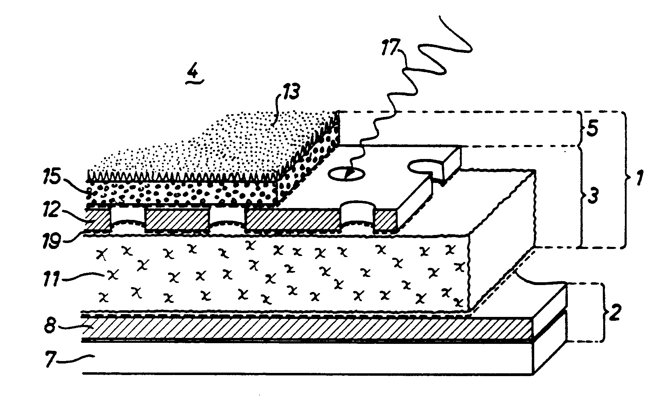

Weitere bevorzugte Merkmale der geräuschmindernden Verkleidung sind in den Ansprüchen angegeben. Nachfolgend soll die Erfindung anhand einiger Ausführungsbeispiele und mit Hilfe der beigefügten Figur näher erläutert werden.

Die alleinige Figur zeigt:
eine perspektivische Darstellung eines Ausschnittes aus einer erfindungsgemäß hergestellten und auf einem schwingfähigen Karosserieunterteil liegenden Verkleidung.

Die in der alleinigen Figur dargestellte Verkleidung 1 liegt auf einem schwingfähigen Karosserieunterteil 2 und weist im wesentlichen ein diesem Karosserieunterteil 2 zugewandtes akustisches Isolationssystem 3 und eine dem Fahrgastraum 4 zugewandte Teppichlage 5 auf. Das in dieser Figur dargestellte Karosserieunterteil 2 besteht einfacherweise aus einem Blech- oder Kunststoffteil 7, weist in der Regel aber eine bituminöse Schicht 8 auf, welche in der Regel auf das Blech- oder Kunststoffteil 7 aufgeschmolzen oder aufgeklebt wird. Unter besonderen Umständen kann diese bituminöse Schicht 8 auch nur aufgelegt sein. Solche bituminösen Schichten werden wegen ihres ausgezeichneten schwingungsdämpfenden Effektes verwendet und sind jedem Fachmann auf dem Gebiet der Fahrzeugakustik hinlänglich bekannt.

Das auf dieses Karosserieunterteil 2 aufgebrachte Isolationssystem 3 besteht im wesentlichen aus einer als gedämpfte Feder des akustischen Feder-Masse-Systems 3 wirkende Federschicht 11 und einer als Masse wirkende Schwerschicht 12. Solche Feder-Masse-Systeme sind dem Fachmann ebenfalls bekannt und können aus den verschiedenartigsten Materialien bestehen. In einer bevorzugten Ausführungsform besteht die Federschicht 11 aus einem geeigneten Faservlies. Es versteht sich aber, dass als gedämpfte Feder auch ein Schaum verwendet werden kann. Als Schwerschicht 12 wird in der Regel wiederum eine bituminöse Schicht oder ein gummiartiges Recyclingprodukt verwendet. In der bevorzugten Ausführungsform weist die Schwerschicht 12 ein Flächengewicht von 2-4 kg/m² auf, kann aber ausnahmsweise mehr als 15 kg/m² wiegen.

Die Schwerschicht 12 ist luftdurchlässig ausgeführt. Eine entsprechende Porosität kann nachträglich, beispielsweise durch gezielt verteilte und dimensionierte Bohrungen, erzeugt werden oder kann in natürlicher Weise, insbesondere bei offenporigen Schäumen, bereits bestehen.

Es versteht sich, dass der Fachmann solche Materialien bevorzugt, welche eine kontrollierbare Porosität ermöglichen, wie dies insbesondere bei mit schweren Partikeln versehenen oder teilweise gefüllten Matten der Fall ist. Mit der kontrollierbaren Luftdurchlässigkeit und der gezielten Verteilung der Porosität sind dem Verfahrenstechniker erstmals Möglichkeiten in die Hand gegeben, um die für die akustische Wirksamkeit wesentlichen Luftströmungswiderstandswerte der gesamten Verkleidung zu kontrollieren, aufeinander abzustimmen und den lokalen Erfordernissen und Bedingungen anzupassen. In einer bevorzugten Ausführungsform weist der Luftströmungswiderstand der gesamten Verkleidung unabhängig von lokal verdichteten Zonen der Federschicht einen konstanten Wert auf. Die gezielt verteilte Porosität wurde durch das Einbringen von Löchern mit ca. 9 mm Durchmesser erzeugt, was einen einfachen Verfahrensschritt im Verfahren zur Herstellung der erfindungsgemässen Verkleidung darstellt.

Die auf diesem porösen Isolationssystem 3 aufgebrachte Teppichlage 5 besteht in einer bevorzugten Ausführungsform aus einer veloursartigen Laufschicht 13 und einer Unterschicht 15. Es versteht sich, dass die Laufschicht 13 auch aus einem Nadelfilz oder einem anderen Material bestehen kann und dass die Teppichlage 5 den Wünschen entsprechend beliebig ausgewählt werden kann und auf das akustische Isolationssystem 3 aufgelegt oder aufgeklebt sein kann. Wesentlich für die erfindungsgemäße Verkleidung 1 ist dabei, daß die Teppichlage offenporig ist, damit das Schallfeld 17 des Fahrgastraumes 4 an die gedämpfte Federschicht 11 ankoppeln und dort absorbiert werden kann.

Die Doppelfunktion der Federschicht 11, als gedämpfte Feder einerseits und als Absorber andererseits, führt zu einer überraschend hohen akustischen Wirksamkeit, obwohl die Masse des Masse-Feder-Systems 3 im Kleinen inhomogen verteilt ist, welche Wirksamkeit bei einem in einem Fahrzeug eingebauten Ausführungsmuster der erfindungsgemäßen Verkleidung auf einem Rollenprüfstand in einem halb-schalltoten Raum vermessen wurde. Der Motor wurde in ca. 1 min. von ca. 1'500 auf 6'000 Umdrehungen pro Minute beschleunigt und der Schalldruck an der Stelle des "Beifahrerohr aussen" mit einer geeichten Meßkette gemessen. Dabei konnte für alle Drehzahlen eine Verbesserung des Innengeräusches festgestellt werden. Diese Verbesserung beträgt gegenüber einer konventionellen Verkleidung mehrere Prozente des Artikulationsindex. Bei dieser Ausführung wies die Federschicht eine Stärke von ca. 15 mm auf, die perforierte Schwerschicht 12 eine solche von ca. 2 mm.

Bei der erprobten Herstellung der Verkleidung wird die Federschicht 11 mit der Schwerschicht 12 des akustischen Masse-Feder-Systems punktweise verklebt. Ebenso wird die Teppichlage 5 am Isolationssystem 3 befestigt.

Um die ausgezeichneten akustischen Eigenschaften der Federschicht 11 langzeitig zu erhalten und um den Fahrzeuginnenraum vor Geruchsbeeinträchtigungen zu bewahren, wird die erfindungsgemäße Verkleidung mit einer zwischen der Federschicht 11 und der Schwerschicht 12 des Isolationssystems 3 liegenden Sperrschicht 19 versehen. Diese Sperrschicht 19 ist wasserundurchlässig und besteht im einfachsten Fall aus einer dauerelastischen, porösen Kleberschicht. Es versteht sich, dass als Sperrschicht 19 eine geeignete hydrophobe Beschichtung verwendet werden kann oder eine entsprechende Behandlung vorgenommen werden kann, welche je nach Beschaffenheit der Federschicht 11 vom Fachmann den gewünschten Eigenschaften entsprechend gewählt werden kann. Beispielsweise kann auch eine mikroporöse Folie, welche imstande ist, die fahrgastseitigen Schallwellen zu transmittieren, als Sperrschicht 19 eingelegt werden.

In Uebereinstimmung mit der Lehre der vorliegenden Erfindung ist diese Sperrschicht luftdurchlässig und insbesondere auch wasserdampfdurchlässig.

Weitere Ausbildungen der erfindungsgemäßen Verkleidung liegen im gewöhnlichen technischen Handeln des Fachmanns. So kann beispielsweise die Sperrschicht 19 eine imprägnierte oder eine gespritze, insbesondere flammgespritze Beschichtung sein. Eine weitere Sperrschicht kann auch zwischen der Schwerschicht 12 des Isolationssystems 3 und der Teppichlage 5 liegen oder in der Teppichlage 5 selbst integriert sein. Insbesondere können auch geeignet perforierte Folien verwendet werden.

Die poröse Schwerschicht 12 des akustischen Isolationssystems 3 ist in die Teppichlage 5 integriert. Dies vereinfacht die Herstellung der geräuschmindernden Verkleidung.

Darüber hinaus kann damit auch die Trittfestigkeit verbessert werden, d.h. das Gefühl der Unsicherheit wegen eines schwammigen Fußbodenbelags zum Verschwinden gebracht werden. Es versteht sich, daß der Fachmann die Dimensionierung der einzelnen Schichten den Wünschen entsprechend und unter besonderer Berücksichtigung der hier beschriebenen Effekte bestimmen kann.

Es versteht sich weiter, daß die Verkleidung für Fahrzeuge oder Baumaschinen jeder Art ebenso ihre Verwendung finden kann, wie in allen Gebäulichkeiten, in welchen der Geräuschpegel herabgesetzt werden soll.

## Patentansprüche

1. Geräuschmindernde Verkleidung für die Innenausstattung der Fahrgastkabinen von Fahrzeugen mit einer fahrgastraumseitigen Teppichlage (5), welche eine Teppich-Laufschicht (13) und eine, insbesondere aus geschäumtem Kunststoff bestehende Teppich-Unterschicht (15) umfasst, und
mit einem akustischen Isolationssystem (3) aus mindestens einer der Teppichlage (5) zugewandten als Masse eines akustischen Masse-Feder-Systems wirkenden Schwerschicht (12) und einer einem schwingfähigen Karosserieunterteil (2) zugewandten, als gedämpfte Feder des akustischen Masse-Feder-Systems wirkende Federschicht (11),
wobei zur Erhöhung der schallabsorbierenden Wirksamkeit der Verkleidung die Schwerschicht (12) des Isolationssystems (3) als luftdurchlässige Schicht ausgebildet ist, dadurch gekennzeichnet, daß die luftdurchlässige Schwerschicht (12) in die Teppichlage (5) integriert ist, daß die gesamte Teppichlage (5) als luftdurchlässige Schicht ausgebildet ist, und daß mindestens zwischen der Schwerschicht (12) und der Federschicht (11) eine Sperrschicht (19) in Form einer wasserdampfdurchlässigen, die Transmission von Schallwellen erlaubenden, jedoch wasserundurchlässigen Schicht vorgesehen ist, damit das fahrgastraumseitige Schallfeld (4) akustisch an die Federschicht (11) des Isolationssystems (3) ankoppeln kann.

2. Geräuschmindernde Verkleidung gemäß Anspruch 1, dadurch gekennzeichnet, daß die Unterschicht (15) der Teppichlage (5) ein offenporiger Schaum ist.

3. Geräuschmindernde Verkleidung gemäß Anspruch 1, dadurch gekennzeichnet, daß die Schwerschicht (12) des akustischen Isolationssystems (3) eine Lochung aufweist und insbesondere Thermoplaste, Elastomere und Weichmacherzuschläge enthält.

4. Geräuschmindernde Verkleidung gemäß Anspruch 1, dadurch gekennzeichnet, daß die Federschicht (11) des akustischen Isolationssystems (3) aus einem verpreßten Wirrfaservlies besteht.

5. Geräuschmindernde Verkleidung gemäß Anspruch 1, dadurch gekennzeichnet, daß die Lochung der Schwerschicht (12) mindestens teilweise ausgeschäumt ist.

6. Geräuschmindernde Verkleidung gemäß Anspruch 1, dadurch gekennzeichnet, daß die Sperrschicht (19) eine wasserundurchlässige Kleberschicht umfaßt.

7. Geräuschmindernde Verkleidung gemäß Anspruch 1, dadurch gekennzeichnet, daß die Sperrschicht (19) eine hydrophobe Beschichtung umfaßt.

8. Geräuschmindernde Verkleidung gemäß Anspruch 1, dadurch gekennzeichnet, daß die Sperrschicht (19) eine dünne Kunststoffolie umfaßt.

## Claims

1. Noise-reducing covering for the inside fittings of the passenger compartments of vehicles with carpet (5) on the passenger side, which includes a carpet surface layer (13) and a carpet subsurface layer (15) consisting in particular of foamed plastic, and
with an acoustic insulation composite (3) comprising at least one heavy layer (12) turned toward the carpet covering (5) working as the mass of an acoustic spring mass system, and a spring layer (11) turned toward a vibratable bottom part of the automobile body (2), working as a spring having sound-damping quality of the acoustic spring mass system,
whereby to increase the sound-absorbing effectiveness of the covering, the heavy layer (12) of the insulation composite (3) is configured as an air-permeable layer, characterized in that
the air-permeable heavy layer (12) is integrated into the carpet (5),
the entire carpet (5) is configured as an air-permeable layer, and that
at least between the heavy layer (12) and the spring layer (11) there is a barrier layer (19) in the form of a steam-permeable layer, permitting the transmission of sound waves, but being impermeable to water, in order that the sound field (4) on the passenger side can couple acoustically with the spring layer (11) of the insulation composite (3).

2. Noise-reducing covering according to claim 1, characterized in that the subsurface layer (15) of the carpet covering (5) comprises an open-pore foam.

3. Noise-reducing covering according to claim 1, characterized in that the heavy layer (12) of the acoustic insulation composite (3) comprising a perforation and incorporates in particular thermoplastics, elastomers and softener additives.

4. Noise-reducing covering according to claim 1, characterized in that the spring layer (11) of the acoustic insulation composite (3) consists of a pressed non-woven fibre fleece.

5. Noise-reducing covering according to claim 1, characterized in that the perforations of the heavy layer (12) are at least partially filled with foam.

6. Noise-reducing covering according to claim 1, characterized in that the barrier coating (19) incorporates a water-impermeable adhesive layer.

7. Noise-reducing covering according to claim 1, characterized in that the barrier coating (19) comprises a hydrophobic coating.

8. Noise-reducing covering according to claim 1, characterized in that the barrier coating (19) comprises a thin plastic foil.

## Revendications

1. Revêtement amortisseur de bruit pour l'installation intérieure des cabines de passagers de véhicules, ledit revêtement étant composé d'une strate de tapis (5) côté cabine, cette strate renfermant se couche d'usure (13) et une couche inférieure (15) composée en particulier de matière plastique en mousse cellulaire, le revêtement étant également composé d'un système d'isolation acoustique (3) constitué au moins d'une couche massive (12) tournée du côté de la strate de tapis (5) et servant de masse pour un système combinant masse et élasticité, ainsi que d'une couche élastique (11) tournée du côté du bâti de la carrosserie (2) et agissant comme un ressort amorti du système combinant masse et élasticité, l'absorption acoustique du revêtement étant améliorée par le fait que la couche massive (12) du système d'isolation (3) est conçue comme une couche perméable à l'air, caractérisé en ce que la couche massive (12) perméable à l'air est intégrée dans la strate de tapis (5), en ce que l'ensemble de la strate de tapis (5) est conçue comme une couche perméable à l'air, et en ce que au moins entre la couche massive (12) et la couche élastique (11) soit prévue une couche isolante (19) sous forme d'une couche perméable à la vapeur d'eau, permettant la transmission d'ondes sonores, mais imperméable à l'eau, ce afin que le champ sonore (4) côté cabine puisse être en contact acoustiquement avec la couche élastique (11) du système d'isolation (3).

2. Revêtement amortisseur de bruit conforme à la revendication 1, caractérisé en ce que la couche inférieure (15) de la strate de tapis (5) est une mousse poreuse.

3. Revêtement amortisseur de bruit conforme à la revendication 1, caractérisé en ce que la couche massive (12) du système d'isolation acoustique (3) présente une perforation et est constituée plus particulièrement de matière thermoplastique, d'élastomère et d'agrégats plastifiés.

4. Revêtement amortisseur de bruit conforme à la revendication 1, caractérisé en ce que la couche élastique (11) du système d'isolation acoustique (3) se compose d'une toison de fibres embrouillées comprimées.

5. Revêtement amortisseur de bruit conforme à la revendication 1, caractérisé en ce que la perforation de la couche massive (12) est au moins partiellement débarrassée de la mousse.

6. Revêtement amortisseur de bruit conforme à la revendication 1, caractérisé en ce que la couche isolante (19) se compose d'une couche collante imperméable à l'eau.

7. Revêtement amortisseur de bruit conforme à la revendication 1, caractérisé en ce que la couche isolante (19) se compose d'un revêtement hydrophobe.

8. Revêtement amortisseur de bruit conforme à la revendication 1, caractérisé en ce que la couche isolante (19) se compose d'une fine feuille en matière plastique.
